# EUROPEAN PATENT SPECIFICATION

(11) **EP 4 151 917 B1**
(45) Date of publication and mention of the grant of the patent: **20.08.2025**
(21) Application number: 21197539.6
(22) Date of filing: 17.09.2021
(51) Int. Cl.: F24F 8/10, F24F 8/80, F24F 11/57, F24F 11/58, F24F 11/64, F24F 11/65, F24F 11/72, F24F 11/89, F24F 13/28, F24F 13/10, F24F 110/50

(54) **AIR FILTERING UNIT**
LUFTFILTRATIONSEINHEIT
UNITÉ DE FILTRAGE D'AIR

(43) Date of publication of application: 22.03.2023
(73) Proprietor: Carrier Corporation, Palm Beach Gardens, FL 33418 (US)
(72) Inventor: JOSSERAND, Olivier, 01120 Montluel (FR); GEYNET, Christophe, 01120 Montluel (FR)
(74) Representative: Dehns

(56) References cited:
- EP-A1- 3 330 624
- EP-A1- 3 358 269
- EP-A1- 3 367 183
- WO-A1-2016/150368
- CN-A- 111 811 070
- US-A- 4 850 264
- US-A1- 2008 203 866

## Description

The present invention relates to an air filtering unit for filtering air from an indoor setting, and a method of filtering air from an indoor setting.

It is important for the health and safety of occupants within in an indoor setting that the indoor air quality is above a certain threshold. If the concentration of pollutants or contaminants within the air in the indoor setting is too high this can be detrimental to their physical and mental wellbeing. For example, a high concentration of viral particles can lead to the spread of contagious diseases throughout the occupants of the room. It is possible to reduce the concentration of the pollutants by filtering the indoor air using high filter efficiency filters. However due to the corresponding high pressure drop across filters with high filter efficiencies, a higher power is required compared to filtering systems with a low filter efficiency in order to maintain the same throughput of air through the air filtering system. Energy is therefore wasted by using the high filter efficiency filter at times when the indoor air quality is high enough that the high filter efficiency is not required.

It would therefore be beneficial to use an air filtering system that can react to changes in the indoor air quality in order to only use a high filter efficiency filter when necessary in order to save energy.

CN 111 811 070 A discloses a multifunctional household central air-conditioning system comprising an air temperature and humidity adjustment module, a low efficiency filter and a high efficiency filter in order to purify, cool, heat and/or dehumidify air obtained from an indoor setting. The system has four modes of operation; an air temperature and humidity adjustment mode, an air purification mode, a general ventilation mode, and a combined air and humidity adjustment and purification mode. These modes employ differing combinations of the air temperature and humidity adjustment module and the filters. The mode of operation is selected responsive to a measurement from an indoor air quality sensor.

According to a first aspect of the invention, there is provided an air filtering unit for filtering air from an indoor setting according to claim 1. The air filtering unit comprises: a housing comprising: a first indoor inlet air path and a second indoor inlet air path for receiving indoor air, and an outlet for discharge of filtered air, wherein all indoor air entering the housing must flow through the first indoor inlet air path or the second indoor inlet air path in order to reach the outlet, and an outdoor inlet and an outdoor inlet air path, wherein the outdoor inlet air path directs outdoor air into a flow path of filtered air to be discharged into the indoor setting; an indoor damper arrangement comprising one or more damper elements controllable between at least a first configuration and a second configuration, wherein in the first configuration the first indoor inlet air path is open whilst the second indoor inlet air path is closed to airflow, and wherein in the second configuration the second indoor inlet air path is open whilst the first indoor inlet air path is closed to airflow; a first filter device; a second filter device, wherein the first filter device has a higher filtering efficiency than the second filter device, wherein indoor air flowing through the first indoor inlet air path is directed through the first filter device and indoor air flowing through the second indoor inlet air path is directed through the second filter device; a controller for controlling the indoor damper arrangement; wherein: i) the controller is configured to communicate with a building management system or a smartphone app and the controller controls the indoor air damper arrangement responsive to instructions received from the building management system or smart phone app; and/or ii) the air filtering unit further comprises an indoor air quality sensor for obtaining a measurement relating to indoor air quality within the indoor setting, wherein the controller controls the indoor air damper arrangement responsive to the measurement such that when the measurement indicates that the indoor air quality is below a predetermined level, the controller is configured to place the indoor damper arrangement in the first configuration, and when the indoor air quality is above the predetermined level the controller places the indoor damper arrangement in the second configuration.

The air filtering unit is hence capable of filtering the indoor air to different degrees before returning the filtered air to the indoor setting, with the degree of filtering being dependent on indoor air quality. All of the air flowing through the unit is treated with the filter device that is selected. When the indoor air quality within the indoor setting in which the unit is installed is below a predetermined, or first threshold, level the indoor damper arrangement is placed in the first configuration such that air flows from the indoor setting into the housing of the air filtering unit via the first indoor inlet air path. The air therefore passes through the higher efficiency filter device, the first filter device, so that it is filtered to a high extent. This operation of the air filtering unit may be referred to as indoor air quality performance optimisation mode since priority is given to cleaning the indoor and increasing the indoor air quality. The indoor air quality may be below a threshold level of quality when the purity of the air is below a certain level. This could be indicated, for example, by the concentration of oxygen in the air being below a certain level. Alternatively, the indoor air quality may be below a threshold level of quality when the concentration of pollutants or contaminants within the air is above a certain level.

When the indoor air quality is above a predetermined, or first threshold, level the indoor damper arrangement is placed in the second configuration such that air flows from the indoor setting into the housing of the air filtering unit via the second indoor inlet air path. The air therefore passes through the lower efficiency filter device, the second filter device, so that it is filtered to a lesser extent. This operation of the air filtering unit may be referred to as energy optimisation mode since priority is given to energy efficiency by using a filter device with a lower filtering efficiency which typically requires less mechanical energy to force the air across the filter device for a given ventilation rate compared to a filter device with a higher filtering efficiency.

The housing provides containment to the components of the air filtering unit such that the air flowing through the unit is confined to the flow through either the first or second filtering device before being discharged into the indoor setting.

The indoor damper arrangement comprise at least one damper element which controls airflow through the first indoor inlet air path and the second indoor inlet air path. The indoor damper arrangement may comprise a first damper element which controls airflow through the first indoor inlet air path and a second damper element which comprises airflow through the second indoor inlet air path. Further damper elements may be provided to control airflow through the first and second indoor inlet air paths.

The indoor damper arrangement can be controlled to a first configuration to open the first indoor air path and close the second indoor inlet air path, and second configuration to close the first indoor inlet air path and open the second indoor inlet air path. The indoor damper arrangement may also be controlled to a configuration between these two end points whereby the first indoor inlet air path is open to a partial extent and the second indoor inlet air path is open to a partial extent, or any combination of the first and second indoor inlet air paths being open, closed or partially open. Where a plurality of damper elements are provided to control airflow through each of the first and second indoor inlet air paths, these may be individually controlled between open and closed positions in order to vary the volume of air flowing along each indoor inlet flow path.

The filter efficiency of the first and second filter device relates to the percentage of particles of a certain size which will be removed from the airflow during filtration, i.e. stopped by and retained in the filter medium. The higher filter efficiency of the first filter device means that the first filter device will remove a higher percentage of particles of a certain size and/or a larger range of unwanted materials than the second filter device. The first filter device may be tailored to removing particles of a smaller size than the second filter device and/or to have additional air treatment effects compared to the second filter device.

The indoor air quality sensor may be disposed within the indoor setting so that the quality of the air in the room is measured. The sensor may detect the presence and/or concentration of pollutants or contaminants within the air including dust, pollen, mould, bacteria and viruses. The sensor may alternatively or additionally detect gasses which can be harmful to health such as carbon monoxide and carbon dioxide. The sensor may comprise a particulate sensor (e.g. optical particle counter), smoke sensor, gas sensor (e.g. electrochemical sensors, photo ionisation detector, infrared and optical sensors), humidity sensor, temperature sensor, room occupancy sensor. The indoor air quality sensor may include multiple types of sensors and the measurement from each sensor may contribute to the measurement relating to indoor air quality within the indoor setting for use by the controller to determine whether the indoor air quality is at a level such that the indoor damper arrangement should be placed in the first or second configuration.

The indoor setting may be a building such as an office block, shop, warehouse, house, block of flats, hotel, gym, hall, lecture hall, theatre, cinema or other indoor venue etc., or it may be a room within such a building. The air handling unit may be installed in a false ceiling. The air filtering unit may therefore be installed in the region between the original, structural ceiling and a lower ceiling which is hung or otherwise suspended from the original, structural ceiling. The unit is therefore concealed and provided in a location at the top of the indoor setting, ideal for receiving air from the indoor setting and dispersing the filtered air back into the indoor setting. If the air filtering unit is provided as a standalone module this can be directly installed within the plenum created by a false ceiling. Air handling units for use within buildings are typically installed within the plenum created by a false ceiling, hence if the air filtering unit is provided as a module for use with an air handling unit, the air handling unit will also be installed within the plenum created by a false ceiling in order to connect with that air handling unit.

The building management system or smart phone app may provide instructions to the controller to set the indoor damper arrangement to the first configuration during scenarios requiring high safety standards. For example, in times of epidemic or pandemic risk the building management system can override the controller's response to the indoor air quality measurement and ensure that the air is filtered using the first filter device independently from any indoor air quality measurement. The user may be able to input a user preference into the building management system or smart phone app in order to override the automatic control of the controller or building management system. The building management system may be connectable to the internet and provide instructions to the controller based on input or information received via the internet. For example, if a pandemic risk in the location or region in which the air filtering unit is installed indicates that extra safety precautions should be enforced, the building management system or smart phone app having received such information can instruct the controller to place the indoor damper arrangement into the first configuration in order to provide increased safety. Conversely, if the if a pandemic risk in the location or region in which the air filtering unit is installed is no longer indicative that extra safety precautions are required, the building management system or smart phone app can receive such information and instruct the controller to place the indoor damper arrangement into the second configuration in order to operate with higher energy efficiency.

Optionally, the air filtering unit may further comprise an inlet diffuser arrangement and/or an inlet grille arrangement, each disposed upstream of the first indoor inlet air path and the second indoor inlet air path.

An upstream portion of the diffuser may be configured to take in air from the indoor setting and a downstream portion of the diffuser may be configured to expel air into the first indoor airflow inlet and the second indoor inlet airflow. The grille may be configured to allow air to pass through the grille whilst blocking large particles or debris from entering the first and second indoor inlet airflows. The grille may be formed of a mesh-type structure, or bars separated by gaps, through which the air can flow. The gaps in the mesh or bars may be small so that objects or large particles such as dust are prevented from entering the air filtering unit. If an inlet diffuser is present, the grille may be disposed upstream or downstream of the inlet diffuser.

The housing of the air filtering unit comprises an outdoor inlet and an outdoor inlet air path wherein the outdoor inlet air path directs outdoor air into a flow path of filtered air to be discharged into the indoor setting.

The outdoor inlet may be open to outside air. The outdoor inlet air path may introduce outdoor air into the housing, so that the outdoor air can be discharged through the outlet for discharge of filtered air and into the indoor space. The outdoor air may be introduced into a filtered air path within the housing. The filtered air path transports indoor air that has passed through either of the first and second filter devices to the outlet to be introduced back into the indoor space. The outdoor air may be of higher air quality, and hence contain a lower proportion of contaminants, than the indoor air. By allowing the outdoor air to enter the filtered air path, greater amounts of filtered/higher air quality air can be introduced into the indoor setting without requiring an increase in the volume of air passing through the filters. Less mechanical energy is therefore required to drive the airflow over the filters for the same discharge airflow rate. The outdoor inlet may include a grille upstream of the outdoor inlet air path for preventing objects or large particles such as dust or debris from entering the outdoor inlet air path.

Optionally the housing of the air filtering unit may further comprise an outdoor damper arrangement comprising one or more outdoor damper elements controllable between at least an open configuration and a closed configuration.

The housing can therefore be open to the outdoor air when the outdoor damper arrangement is in an open configuration to allow outdoor air to enter the housing, or closed to the outdoor air when the outdoor damper arrangement is in a closed configuration to stop outdoor air from entering the housing. The outdoor air damper arrangement may be moved between the open configuration and the closed configuration in response to a call for outdoor air by the controller. The outdoor air damper arrangement may be manually moved between the open configuration and the closed configuration by a user. The outdoor damper elements may be controllable to a partially open configuration. The degree of opening of the outdoor damper arrangement may therefore be varied in order to vary the volume of outdoor air passing through the outdoor inlet. The outdoor damper arrangement may be controllable to a number of further configurations between the open configuration, the partially open configuration and the closed configuration.

The configuration of the outdoor damper arrangement may be controlled by the controller in response to the indoor air quality measurement. Thus, if the indoor air quality is below a predetermined level, or second threshold, the outdoor damper arrangement can be controlled to the open configuration. The degree of opening of the outdoor damper arrangement can vary as the indoor air quality measurement varies. The volume of outside air entering the housing is therefore dependent on the indoor air quality.

The unit may further comprise an outdoor air quality sensor. The quality of the outdoor air can therefore be measured and the controller may then control the configuration of outdoor damper arrangement in response to the outdoor air quality measurement. Hence, if the outdoor air quality is below a predetermined level, or third threshold, the controller controls the outdoor damper arrangement into a closed position even if there is a call for outdoor air in response to the indoor air quality measurement. If the outdoor air quality measurement is above the predetermined level, or third threshold, and the controller calls for outdoor air in response to the indoor air quality measurement, the controller controls the outdoor damper arrangement into an open position. In this way the ability of the outdoor air to improve the quality of the indoor air in the indoor setting is assessed and the volume of outdoor air entering the housing and thus the indoor setting is controlled accordingly.

Optionally, the first filter device may comprise a high efficiency particulate air filter or adsorbent filter capable of removing sub-micron airborne allergens and pollutants such as dust, pollen, mould, bacteria and viruses.

The first filter device may alternatively or additionally comprise a UV filter, an electrostatic filter, photocatalytic filter, a charcoal or activated charcoal filter or any other type of filter that has a higher filtering efficiency than the filtering efficiency of the second filtering device. The filter may be passive and not require any particular activation in order to filter the air, or it may be an active filter and require specific activation in order to begin filtering the air, for example certain electrostatic filters and photocatalytic filters require application of a voltage in order to activate their respective filtering mechanisms.

The adsorbent filter may comprise one or more adsorbent materials such as granular adsorbent particles, solid supported amines, activated carbon, clay, carbon fibres, carbon cloth, silica, alumina, zeolite, molecular sieves, titanium oxide, polymers, porous polymers, polymer fibres, or metal organic frameworks. The adsorbent materials may be supplied to the filter in the form of a removable and replaceable cartridge or may be provided as a permanent component.

The first filter device may comprise additional air treatment components such as an air ionizer, an ozone source, a source of radiation, a membrane, foam, paper, fibreglass, a heater, an ultraviolet anti-microbial device, an ion or plasma generator, an oxide, a catalyst or a chemical catalyst.

Optionally, the air filtering unit may further comprise a main fan configured to urge airflow through the housing.

The main fan may thus drive indoor air through the first indoor air path and the second indoor air path, across the first and second filter devices, and then through the discharge outlet in order to deliver filtered air into the indoor setting. The air filtering unit comprising a main fan can hence be used as a standalone air filtering unit which does not require to be integrated within another air handling system.

The pressure drop across the first filter device will be greater than the pressure drop across the second filter device as a result of the higher efficiency filtering provided by the first filter device. The fan may be therefore be required to operate so as to provide a greater air pressure whilst the indoor air is driven over the first filter device to compensate in order to maintain a desired operation of the air filtering unit. The main fan may have various speeds or settings which can be selected depending on the configuration of the indoor damper arrangement and/or the indoor air quality measurement and/or other features of the air filtering unit. The speed of the fan can be set to a high speed when the indoor damper arrangement is in the first configuration and set to a lower speed when the indoor damper arrangement is in the second configuration, therefore providing an energy saving when the air flows across the second filter device compared to when the air flows across the first filtering device. The speed of the fan may be increased when the indoor air quality measurement is below a predetermined level, or fourth threshold, in order to increase the rate of air passing through the air filtering device so that the indoor air quality can be improved in a reduced period of time.

The fan may be provided downstream of the filtering devices or upstream of the filtering devices

Optionally, the air filtering unit may further comprise an auxiliary fan configured to urge airflow across the first filter device and/or the second filter device, wherein the controller controls the operation of the fan in response to the configuration of the indoor damper arrangement and/or the measurement relating to the indoor air quality.

The auxiliary fan may be supplied within the air filtering unit in order to enhance the airflow over the first and/or second filters. Use of the fan therefore avoids performance loss due to the air pressure drop as the air passes through the filters. The fan may operate only when the indoor air damper arrangement is in the first configuration such that air flows through the first indoor air path and hence is directed over the first filter device. Since the first filter device has a greater filtering efficiency than the second filtering device, the pressure drop across the first filtering device is also likely to the greater than the pressure drop across the second filtering device. Therefore, it may only be necessary to use the fan to supply greater air flow when air is directed across the first filtering device in order to maintain adequate air flow through the unit. Energy can therefore be saved by not operating the fan when the indoor damper arrangement is in the second configuration such that the air is directed over the second filter device. Accordingly the operation of the fan may be coupled to the indoor damper arrangement and/or the indoor air quality measurement and/or other features of the air filtering unit. The fan can be switched on when the indoor damper arrangement is in the first configuration and switched off when the indoor damper arrangement is in the second configuration, therefore providing an energy saving when the air flows across the second filter device compared to when the air flows across the first filtering device. The operation of the fan may be controlled via the controller, alternatively the fan may be switched on manually and/or when instructed by a user in order to meet their comfort requirements even when the indoor air damper arrangement is in the second position.

The fan may have various speeds or settings which can be selected depending on the configuration of the indoor damper arrangement and/or the indoor air quality measurement and/or other features of the air filtering unit. In this case, the speed of the fan can be set to a high speed when the indoor damper arrangement is in the first configuration and set to a low speed when the indoor damper arrangement is in the second configuration, therefore still providing an energy saving when possible but maintaining some assistance to the air flow even when the air passes through the second filter device. The speed of the fan may be increased when the indoor air quality measurement is below the predetermined level, or fourth threshold, in order to increase the rate of air passing through the first air filtering device so that the indoor air quality can be improved in a reduced period of time.

The auxiliary fan may be provided downstream of the filtering devices or upstream of the filtering devices.

Optionally, the controller may receive instructions for changing the configuration of the outdoor damper arrangement from the building management system or smartphone app.

The building management system or smart phone app may provide instructions to the controller to set the outdoor damper arrangement to the open configuration during scenarios requiring the input of outdoor air into the air filtering unit and hence the indoor setting. The user may be able to input a user preference into the building management system or smart phone app in order to override the automatic control of the controller or building management system in order to control when outdoor air is introduced into the air filtering unit and hence introduced into the indoor setting. The building management system may be connectable to the internet and provide instructions to the controller based on input or information received via the internet. For example, if the outdoor air pollution risk in the location or region in which the air filtering unit is installed is at an unsafe or undesirable level, the building management system or smart phone app having received such information can instruct the controller to place the outdoor damper arrangement into the closed configuration in order to provide increased safety.

Optionally, an air handling system may be provided, the air handling system comprising the air filtering unit as claimed in any of claims 1 to 4 and 6.

The air filtering unit may be retro-fitted to the air handling system in order to provide increased filtering and safety to that air handling system. The air filtering unit may be installed in a ducted fan coil unit, dedicated outdoor air system or other air handling unit installed within a building. The air filtering unit may be connected to the air handling unit at an inlet side of the air handling unit, so that filtered air is provided to the air handling unit which may increase the efficiency of the air handling unit as well as reducing any build-up of contaminants within the air handling unit.

According to a second aspect of the invention, there is provided a method of filtering air from an indoor setting using the air filtering unit of any of claims 1 to 7, the method comprising: directing indoor air across the first filtering device and/or the second filtering device by controlling the configuration of the indoor damper arrangement; directing outdoor air into a flow path of filtered air to be discharged into the indoor setting; and discharging filtered air into the indoor setting, wherein the configuration of the indoor damper arrangement is controlled by the controller in response to: i) a measurement relating to the indoor air quality obtained from an indoor air quality sensor, such that when the measurement indicates that the indoor air quality is below a predetermined level, the indoor damper arrangement is placed in the first configuration, and when the indoor air quality is above the predetermined level the indoor damper arrangement is placed in the second configuration; and/or ii) an instruction, received via the controller, for controlling the configuration of the indoor damper arrangement from a building management system or a smartphone app.

Optionally, the air filtering unit may further comprise an auxiliary fan configured to urge airflow across the first filter device and/or the second filter device, and the method may further comprise altering the operation of the auxiliary fan in response to the configuration of the indoor damper arrangement and/or the measurement relating to the indoor air quality.

The present invention will now be described, by way of example only, with reference to the accompanying drawings, in which:
Figure 1 is a schematic view of an air filtering unit installed in an indoor setting,
Figure 2 is a schematic view of a first air filtering unit with an indoor damper arrangement in a first configuration,
Figure 3 is a schematic view of the first air filtering unit with the indoor damper arrangement in a second configuration,
Figure 4 is a schematic view of a second air filtering unit comprising a fan with an indoor damper arrangement in a first configuration,
Figure 5 is a schematic view of a the second air filtering unit comprising a fan with an indoor damper arrangement in a second configuration,
Figure 6 is a schematic view of a third air filtering unit comprising a fan with an indoor damper arrangement in a first configuration,
Figure 7 is a schematic view of a third air filtering unit comprising a fan with an indoor damper arrangement in a second configuration.

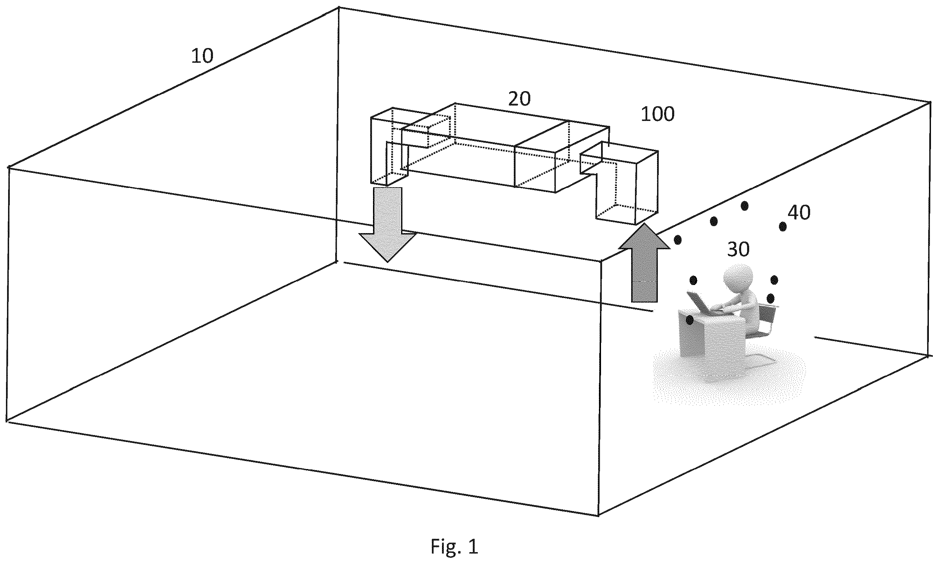

Figure 1 shows an air filtering unit 100 installed in a room 10 of a building. The air filtering unit 100 is installed in a false ceiling and in fluid communication with an air handling system 20 also installed in the false ceiling. The air filtering unit 100 is arranged upstream of the air handling unit 20 so that the filtered air discharged from the air filtering unit 100 enters the air handling system 20 before being discharged into the room 10. Air from the indoor setting, i.e. the room 10, enters the air filtering unit 100 as indicated by the dark grey arrow. Filtered air enters the room 10 as indicated by the light grey arrow. Activity in the room, such as activity by an occupant 30 of the room 10, or air entering the room from outside, may cause a drop in air quality, such as causing pollutants or contaminants 40 to build up in the air of the indoor setting.

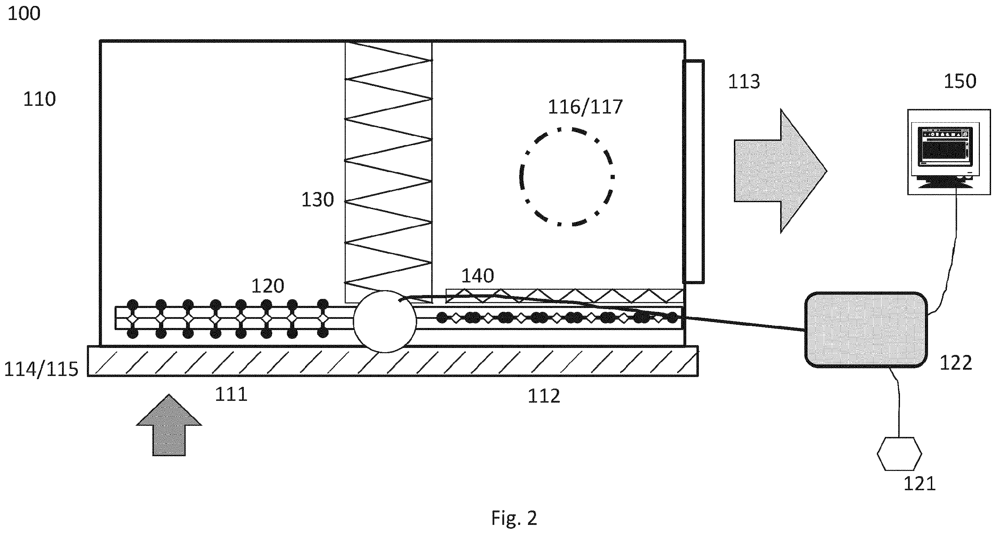

Figure 2 shows an air filtering unit 100 comprising a housing 110 which provides a container for further components of the air filtering unit 100. The housing can be open to air from the indoor setting via a first indoor air pathway 111 and/or via a second indoor air pathway 112 depending on the configuration of the indoor air damper arrangement 120. In Figure 2 the indoor air damper arrangement 120 is configured in the first configuration so that the housing 110 is open to air from the indoor setting via the first indoor air pathway 111, and the second indoor air path 112 is closed. A diffuser 114 and grille 115 is disposed upstream of the first and second indoor air paths 111 and 112 so that large particles such as dust and other objects are prevented from entering the air filtering unit.

A first filter device 130 is disposed in the flow path of the first indoor air path 111 so that the indoor air entering the housing must pass through the first filter device 130 before being discharged from the air filtering unit 100 through the outlet 113. A second filter device 140 is disposed in the housing 110 in the second indoor air path 112, however no air travels through the second filter device 140 in the first configuration.

The housing 110 is open to outside air, that is, air originating from a space other than the indoor setting for example an alternative room or outdoor setting, through outdoor inlet 116. The outside inlet 116 is disposed downstream of the first and second filter devices 130 and 140 such that outside air enters the unit along an outside flow path 117 which directs the outside air to join the filtered indoor air. Both the filtered indoor air and the outside air are discharged into the indoor setting via the outlet 113.

An indoor air quality sensor 121 is provided exterior to the housing 110 so that it is positioned in an optimal location for measuring the indoor air quality. The indoor air quality sensor 121 is in communication with a controller 122 so that the controller can control the configuration of the indoor damper arrangement 120 based on the indoor air quality measurement. The controller 122 is also in communication with a building management system 150 so that the controller can control the configuration of the indoor damper arrangement 120 based on instructions or data received from the building management system 150. The controller may instead be in communication with a smart phone app so that the controller can control the configuration of the indoor damper arrangement 120 based on instructions or data received from the smart phone app.

In air filtering unit 200 the discharge outlet 113 is arranged to discharge air in a direction perpendicular to that of the first and second indoor air paths 111 and 112.

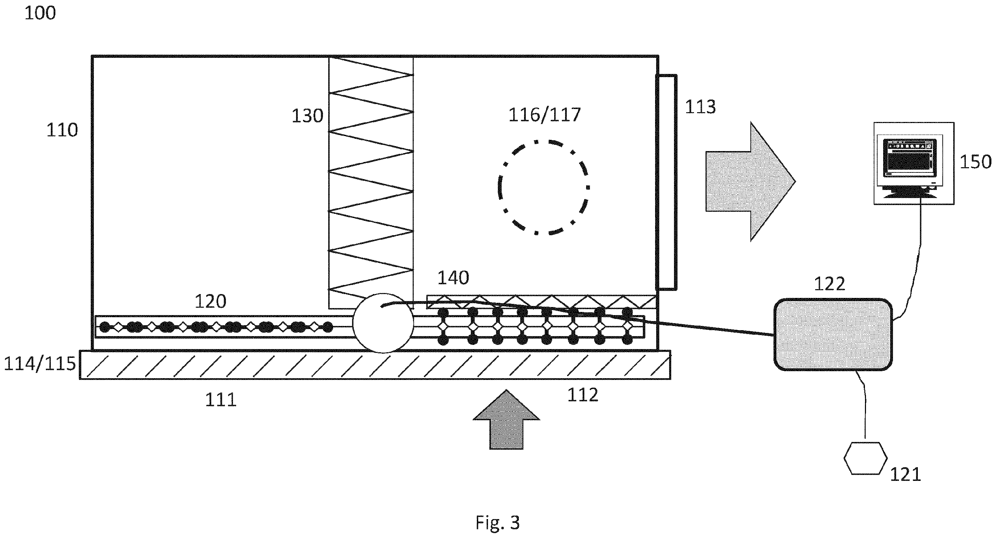

Figure 3 shows the air filtering unit 100 illustrated in Figure 2. In Figure 3, the indoor air damper arrangement 120 is configured in the second configuration so that the housing 110 is open to air from the indoor setting via the second indoor air pathway 112, and the first indoor air path 111 is closed. As shown by the grey arrow, the indoor air now enters the housing via the second indoor air path 112 and the air must now pass through the second filter device 140 before being discharged from the air filtering unit 100 through the outlet 113. No air travels through the first indoor air path 111 or the first filter device 130 in the second configuration.

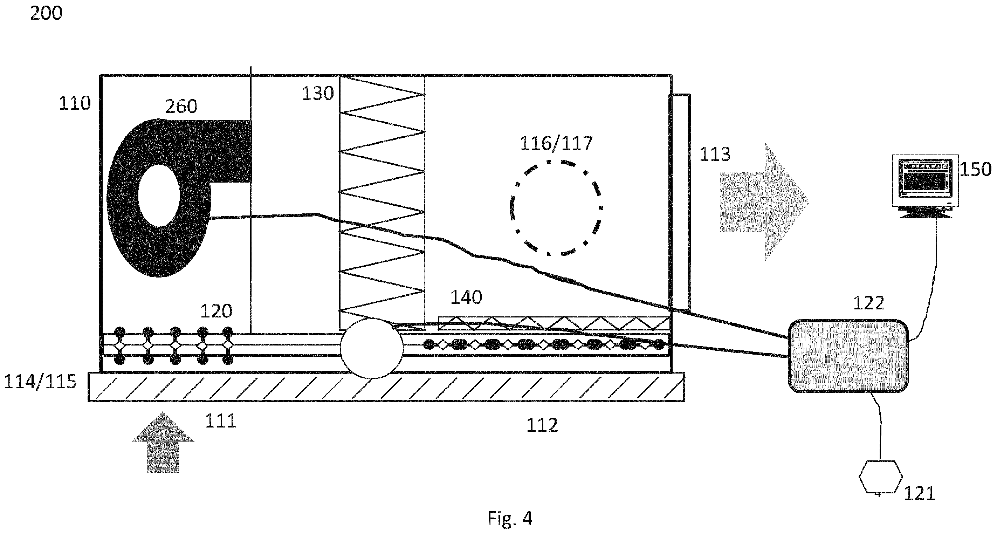

Figure 4 shows an air filtering unit 200 in which like features found in the air filtering device of Figures 2 and 3 are denoted with the corresponding reference figures. The description of those features with respect to Figures 2 and 3 thereby applies. In the air filtering unit of Figure 4 a fan 260 is provided within the housing 110. The fan 260 is arranged so as to urge air through the air filtering unit 200 and in particular to urge air across the first filter device 130. The fan 260 may therefore be activated when the indoor damper arrangement 120 is configured in the first configuration as illustrated in Figure 4. This is so that the fan 260 assists in providing sufficient air flow through the air filtering unit 200, this is particularly beneficial when the higher filtering efficiency of the first filter device 130 produces a corresponding high pressure drop across the filter device.

In the air filtering unit 200 of Figure 4 the fan 260 is disposed in a cavity in the housing 110 downstream of the first indoor air path 111 and upstream of the first filter device 130 such that air is urged through the first indoor air path due to the low pressure created downstream of the fan 260, and the air is then blown across the first filter device by the positive pressure produced upstream of the fan 260.

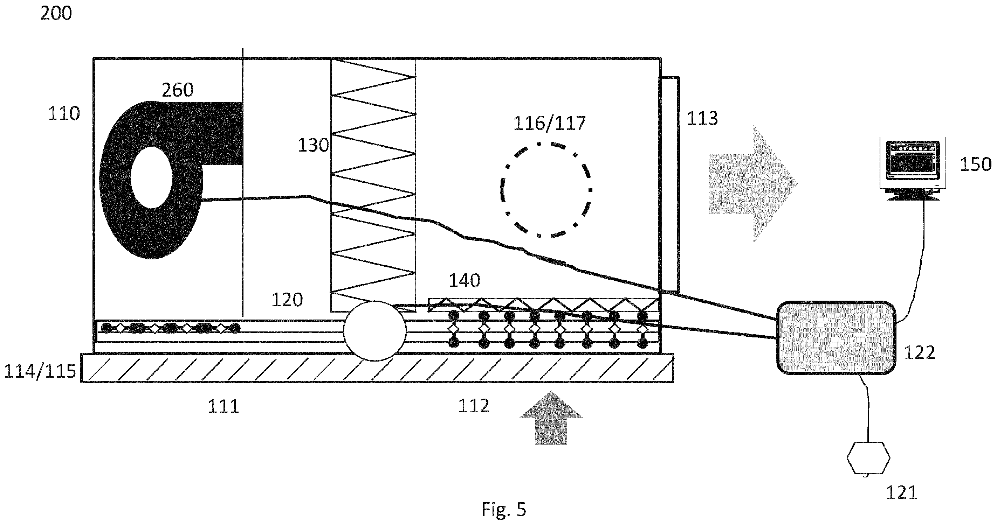

Figure 5 shows the air filtering unit 200 illustrated in Figure 4. In Figure 5 the indoor damper arrangement 120 is in the second configuration such that the first air indoor air path 111 is closed and the second indoor air path 112 is open. The fan 260 may therefore be switched off or run at a reduced power compared to its operation with the indoor damper arrangement in the first configuration. Energy can therefore be conserved without a corresponding decrease in the volume of filtered air being discharged into the indoor setting since in this configuration the air is filtered by the second filter device 140 which having a lower filtering efficiency compared to the first filter device 130 experiences a lower pressure drop across the filter device.

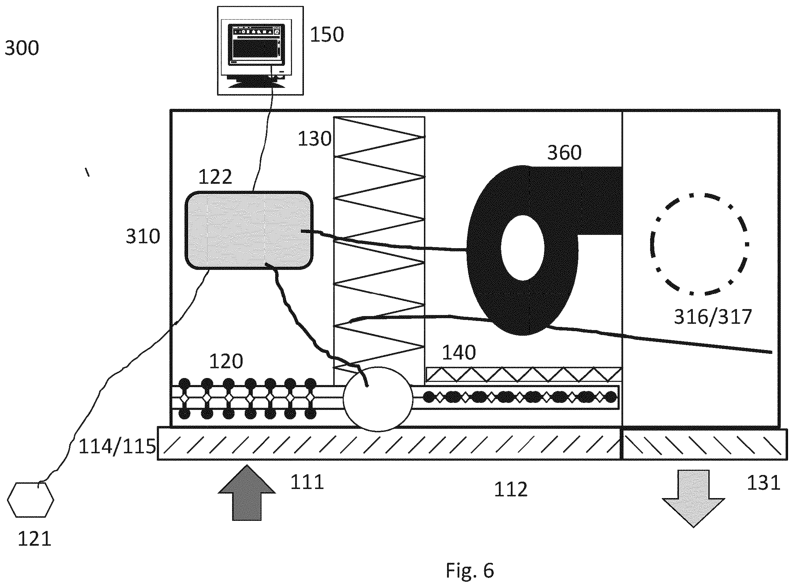

Figure 6 shows an air filtering unit 300 in which like features found in the air filtering device of Figures 2 and 3 are denoted with the corresponding reference figures. The description of those features with respect to Figures 2 and 3 thereby applies. In the air filtering unit of Figure 6 a fan 360 is provided within the housing 310. The fan 360 is arranged so as to urge air through the air filtering unit 300 and in particular to urge air across the first filter device 130. The fan 360 may therefore be activated when the indoor damper arrangement 120 is configured in the first configuration as illustrated in Figure 6. This is so that the fan 360 assists in providing sufficient air flow through the air filtering unit 300, this is particularly beneficial when the higher filtering efficiency of the first filter device 130 compared to the second filter device 140 produces a correspondingly high pressure drop across the first filter device 130.

**In** the air filtering unit 300 of Figure 6, the fan 360 is disposed in a cavity in the housing 310 downstream of both the first indoor air path 111 and the second indoor air path 112. The fan 360 is disposed upstream of the discharge outlet 113. In this configuration the fan 360 urges indoor air across the first filter device 130 as a result of the lower pressure created downstream of the fan 360. The fan 360 further and upstream of the first filter device 130 such that air is urged through the first indoor air path due to the low pressure created downstream of the fan 360, and the air is then blown across the first filter device by the positive pressure produced upstream of the fan 360.

The housing 310 of the air filtering unit 300 comprises an outside air inlet 316 which is open to outside air, that is, air originating from a space other than the indoor setting for example an alternative room or outdoor setting. The outside inlet 316 is disposed downstream of the first and second filter devices 130 and 140 and downstream of the fan 360. Both the filtered indoor air and the outside air are discharged into the indoor setting via the outlet 313 as illustrated by the light grey arrow. In air filtering unit 300 the discharge outlet 313 is arranged to discharge air in a direction opposite to that of the first and second indoor air paths 111 and 112.

Figure 6 illustrates the air filtering unit 300 with the indoor damper arrangement 120 in the first configuration such that indoor air enters the housing 310 via the first indoor air part 111, as shown by the dark grey arrow. The indoor air is therefore filtered through the first filter device 130 only.

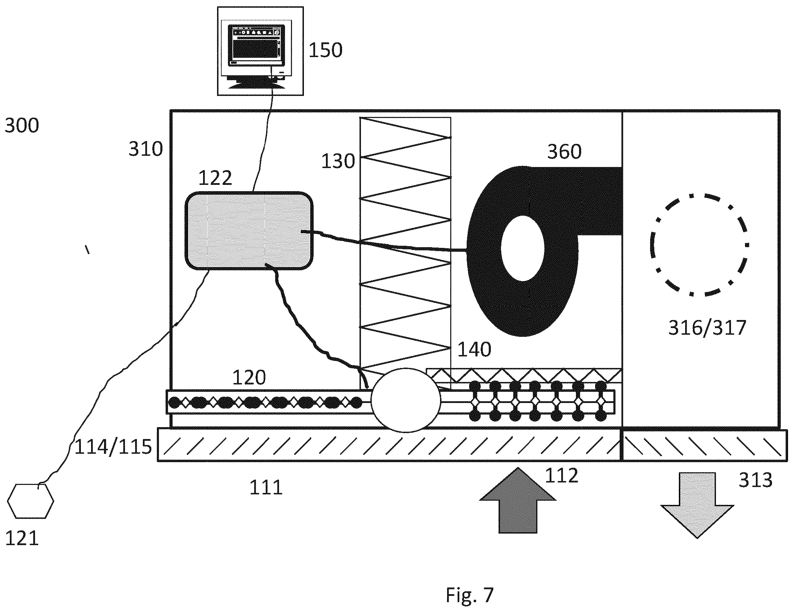

Figure 7 shows the air filtering unit 300 illustrated in Figure 6. In Figure 7 the indoor damper arrangement 120 is in the second configuration such that the first air indoor air path 111 is closed and the second indoor air path 112 is open. The indoor air therefore enters the housing 310 via the second indoor air path 112 and passes over the second filter device 140 only.

## Claims

1. An air filtering unit (100, 200, 300) for filtering air from an indoor setting, the air filtering unit comprising:
a housing (110) comprising:
a first indoor inlet air path (111) and a second indoor inlet air path (112) for receiving indoor air,
an outlet (113) for discharge of filtered air, wherein all indoor air entering the housing must flow through the first indoor inlet air path or the second indoor inlet air path in order to reach the outlet, and
an outdoor inlet (116) and an outdoor inlet air path (117), wherein the outdoor inlet air path directs outdoor air into a flow path of filtered air to be discharged into the indoor setting;
an indoor damper arrangement (120) comprising one or more damper elements controllable between at least a first configuration and a second configuration, wherein in the first configuration the first indoor inlet air path is open whilst the second indoor inlet air path is closed to airflow, and wherein in the second configuration the second indoor inlet air path is open whilst the first indoor inlet air path is closed to airflow;
a first filter device (130);
a second filter device (140), wherein the first filter device has a higher filtering efficiency than the second filter device, wherein indoor air flowing through the first indoor inlet air path is directed through the first filter device and indoor air flowing through the second indoor inlet air path is directed through the second filter device;
a controller (122) for controlling the indoor damper arrangement; wherein:
i) the controller is configured to communicate with a building management system (150) or a smartphone app and the controller controls the indoor air damper arrangement responsive to instructions received from the building management system or smartphone app; and/or
ii) the air filtering unit further comprises an indoor air quality sensor (121) for obtaining a measurement relating to indoor air quality within the indoor setting, wherein the controller controls the indoor air damper arrangement responsive to the measurement such that when the measurement indicates that the indoor air quality is below a predetermined level, the controller is configured to place the indoor damper arrangement in the first configuration, and when the indoor air quality is above the predetermined level the controller places the indoor damper arrangement in the second configuration.

2. An air filtering unit (100, 200, 300) as claimed in claim 1, comprising an inlet diffuser arrangement (114) and/or an inlet grille arrangement (115), each disposed upstream of the first indoor inlet air path (111) and the second indoor inlet air path (112).

3. An air filtering unit (100, 200, 300) as claimed in claim 1 or 2, wherein the housing (110) comprises an outdoor damper arrangement comprising one or more outdoor damper elements controllable between at least an open configuration and a closed configuration.

4. An air filtering unit (100, 200, 300) as claimed in any preceding claim, wherein the first filter device (130) comprises a particulate air filter capable of removing sub-micron airborne allergens and pollutants such as dust, pollen, mould, bacteria and viruses or adsorbent filter.

5. An air filtering unit (200, 300) as claimed in any preceding claim, comprising a main fan configured to urge airflow through the housing (110).

6. An air filtering unit (100, 200, 300) as claimed in any preceding claim, comprising an auxiliary fan (260, 360) configured to urge airflow across the first filter device (130) and/or the second filter device (140), wherein the controller controls the operation of the fan in response to the configuration of the indoor damper arrangement (120) and/or the measurement relating to the indoor air quality.

7. An air filtering unit (100, 200, 300) as claimed in claim any preceding claim, wherein the controller (122) is configured to receive instructions for changing the configuration of the outdoor damper arrangement from the building management system (150) or smartphone app.

8. An air handling system (20) comprising the air filtering unit (100, 200, 300) as claimed in any of claims 1 to 4 and 6.

9. A building comprising:
the air handling system (20) of claim 8, and
a building management system (150) configured to communicate with the controller (122) such that the controller controls the indoor air damper arrangement (120) responsive to instructions received from the building management system.

10. A method of filtering air from an indoor setting using the air filtering unit (100, 200, 300) of any of claims 1 to 7, the method comprising:
directing indoor air across the first filtering device (130) and/or the second filtering device (140) by controlling the configuration of the indoor damper arrangement (120);
directing outdoor air into a flow path of filtered air to be discharged into the indoor setting; and
discharging filtered air into the indoor setting,
wherein the configuration of the indoor damper arrangement is controlled by the controller in response to:
i) a measurement relating to the indoor air quality obtained from the indoor air quality sensor, such that when the measurement indicates that the indoor air quality is below a predetermined level, the indoor damper arrangement is placed in the first configuration, and when the indoor air quality is above the predetermined level the indoor damper arrangement is placed in the second configuration; and/or
ii) instructions, received via the controller, for controlling the configuration of the indoor damper arrangement (120) from a building management system (150) or a smartphone app.

11. A method of filtering air from an indoor setting as claimed in claim 10, wherein the air filtering unit (100, 200, 300) further comprises an auxiliary fan (260, 360) configured to urge airflow across the first filter device (130) and/or the second filter device (140), the method comprising,
altering the operation of the auxiliary fan in response to the configuration of the indoor damper arrangement (120) and/or the measurement relating to the indoor air quality.

## Patentansprüche

1. Luftfiltrationseinheit (100, 200, 300) zum Filtern von Luft aus einer Innenumgebung, wobei die Luftfiltrationseinheit Folgendes umfasst:
ein Gehäuse (110), umfassend:
einen ersten Inneneinlassluftweg (111) und einen zweiten Inneneinlassluftweg (112) zum Aufnehmen von Innenluft,
einen Auslass (113) zum Abgeben gefilterter Luft, wobei die gesamte in das Gehäuse eintretende Innenluft durch den ersten Inneneinlassluftweg oder den zweiten Inneneinlassluftweg strömen muss, um den Auslass zu erreichen, und
einen Außeneinlass (116) und einen Außeneinlassluftweg (117), wobei der Außeneinlassluftweg Außenluft in einen Strömungsweg gefilterter Luft leitet, die in die Innenumgebung abzugeben ist; eine Innenklappenanordnung (120), die ein oder mehrere Klappenelemente umfasst, die zwischen mindestens einer ersten Konfiguration und einer zweiten Konfiguration steuerbar sind, wobei der erste Inneneinlassluftweg in der ersten Konfiguration offen ist, während der zweite Inneneinlassluftweg für den Luftstrom geschlossen ist, und wobei der zweite Inneneinlassluftweg in der zweiten Konfiguration offen ist, während der erste Inneneinlassluftweg für den Luftstrom geschlossen ist;
eine erste Filtrationsvorrichtung (130);
eine zweite Filtrationsvorrichtung (140), wobei die erste Filtrationsvorrichtung einen höheren Filterwirkungsgrad aufweist als die zweite Filtrationsvorrichtung, wobei durch den ersten Inneneinlassluftweg strömende Innenluft durch die erste Filtrationsvorrichtung geleitet wird und durch den zweiten Inneneinlassluftweg strömende Innenluft durch die zweite Filtrationsvorrichtung geleitet wird;
eine Steuerung (122) zum Steuern der Innenklappenanordnung; wobei:
i) die Steuerung zum Kommunizieren mit einem Gebäudemanagementsystem (150) oder einer Smartphone-App konfiguriert ist und die Steuerung die Innenluftklappenanordnung als Reaktion auf von dem Gebäudemanagementsystem oder der Smartphone-App empfangene Anweisungen steuert; und/oder
ii) die Luftfiltrationseinheit ferner einen Innenluftqualitätssensor (121) zum Erhalten einer Messung bezüglich Innenluftqualität innerhalb der Innenumgebung umfasst, wobei die Steuerung die Innenluftklappenanordnung als Reaktion auf die Messung derart steuert, dass die Steuerung zum Bringen der Innenklappenanordnung in die erste Konfiguration konfiguriert ist, wenn die Messung angibt, dass die Innenluftqualität unter einem vorbestimmten Niveau liegt, und die Steuerung die Innenklappenanordnung in die zweite Konfiguration bringt, wenn die Innenluftqualität über dem vorbestimmten Niveau liegt.

2. Luftfiltrationseinheit (100, 200, 300) nach Anspruch 1, umfassend eine Einlassdiffusoranordnung (114) und/oder eine Einlassgitteranordnung (115), die jeweils stromaufwärts des ersten Inneneinlassluftwegs (111) und des zweiten Inneneinlassluftwegs (112) angeordnet ist.

3. Luftfiltrationseinheit (100, 200, 300) nach Anspruch 1 oder 2, wobei das Gehäuse (110) eine Außenklappenanordnung umfasst, die ein oder mehrere Außenklappenelemente umfasst, die zwischen mindestens einer offenen Konfiguration und einer geschlossenen Konfiguration steuerbar sind.

4. Luftfiltrationseinheit (100, 200, 300) nach einem der vorhergehenden Ansprüche, wobei die erste Filtrationsvorrichtung (130) einen Partikelluftfilter, der in der Lage ist, schwebende Allergene und Schadstoffe im Submikronbereich, wie Staub, Pollen, Schimmel, Bakterien und Viren, zu entfernen, oder einen Adsorptionsfilter umfasst.

5. Luftfiltrationseinheit (200, 300) nach einem der vorhergehenden Ansprüche, umfassend ein Hauptgebläse, das zum Zwingen eines Luftstroms durch das Gehäuse (110) konfiguriert ist.

6. Luftfiltrationseinheit (100, 200, 300) nach einem der vorhergehenden Ansprüche, umfassend ein Hilfsgebläse (260, 360), das zum Zwingen eines Luftstroms über die erste Filtrationsvorrichtung (130) und/oder die zweite Filtrationsvorrichtung (140) konfiguriert ist, wobei die Steuerung den Betrieb des Gebläses als Reaktion auf die Konfiguration der Innenklappenanordnung (120) und/oder die Messung bezüglich der Innenluftqualität steuert.

7. Luftfiltrationseinheit (100, 200, 300) nach einem der vorhergehenden Ansprüche, wobei die Steuerung (122) zum Empfangen von Anweisungen zum Ändern der Konfiguration der Außenklappenanordnung von dem Gebäudemanagementsystem (150) oder der Smartphone-App konfiguriert ist.

8. Luftbehandlungssystem (20), umfassend die Luftfiltrationseinheit (100, 200, 300) nach einem der Ansprüche 1 bis 4 und 6.

9. Gebäude, umfassend:
das Luftbehandlungssystem (20) nach Anspruch 8, und
ein Gebäudemanagementsystem (150), das zum Kommunizieren mit der Steuerung (122) derart konfiguriert ist, dass die Steuerung die Innenluftklappenanordnung (120) als Reaktion auf von dem Gebäudemanagementsystem empfangene Anweisungen steuert.

10. Verfahren zum Filtern von Luft aus einer Innenumgebung unter Verwendung der Luftfiltrationseinheit (100, 200, 300) nach einem der Ansprüche 1 bis 7, wobei das Verfahren Folgendes umfasst:
Leiten von Innenluft über die erste Filtrationsvorrichtung (130) und/oder die zweite Filtrationsvorrichtung (140) durch Steuern der Konfiguration der Innenklappenanordnung (120);
Leiten von Außenluft in einen Strömungsweg gefilterter Luft zum Abgeben in die Innenumgebung; und
Abgeben der gefilterten Luft in die Innenumgebung,
wobei die Konfiguration der Innenklappenanordnung durch die Steuerung als Reaktion auf Folgendes gesteuert wird:
i) eine Messung bezüglich der von dem Innenluftqualitätssensor erhaltenen Innenluftqualität derart, dass die Innenklappenanordnung in die erste Konfiguration gebracht wird, wenn die Messung angibt, dass die Innenluftqualität unter einem vorbestimmten Niveau liegt, und die Innenklappenanordnung in die zweite Konfiguration gebracht wird, wenn die Innenluftqualität über dem vorbestimmten Niveau liegt; und/oder
ii) über die Steuerung empfangene Anweisungen zum Steuern der Konfiguration der Innenklappenanordnung (120) von einem Gebäudemanagementsystem (150) oder einer Smartphone-App.

11. Verfahren zum Filtern von Luft aus einer Innenumgebung nach Anspruch 10, wobei die Luftfiltrationseinheit (100, 200, 300) ferner ein Hilfsgebläse (260, 360) umfasst, das zum Zwingen eines Luftstroms über die erste Filtrationsvorrichtung (130) und/oder die zweite Filtrationsvorrichtung (140) konfiguriert ist, wobei das Verfahren Folgendes umfasst,
Ändern des Betriebs des Hilfsgebläses als Reaktion auf die Konfiguration der Innenklappenanordnung (120) und/oder der Messung bezüglich der Innenluftqualität.

## Revendications

1. Unité de filtration d'air (100, 200, 300) destinée à filtrer de l'air d'un environnement intérieur, l'unité de filtration d'air comprenant :
un boîtier (110) comprenant :
un premier trajet d'air d'entrée intérieur (111) et un second trajet d'air d'entrée intérieur (112) destinés à recevoir de l'air intérieur,
une sortie (113) pour l'évacuation d'air filtré, dans laquelle tout l'air intérieur qui entre dans le boîtier doit s'écouler à travers le premier trajet d'air d'entrée intérieure ou le second trajet d'air d'entrée intérieur afin d'atteindre la sortie, et une entrée extérieure (116) et un trajet d'air d'entrée extérieure (117), dans laquelle le trajet d'air d'entrée extérieure dirige de l'air extérieur dans un trajet d'écoulement d'air filtré à évacuer dans l'environnement intérieur ;
un agencement de registre intérieur (120) comprenant un ou plusieurs éléments de registre pouvant être commandés entre au moins une première configuration et une seconde configuration, dans laquelle, dans la première configuration, le premier trajet d'air d'entrée intérieure est ouvert tandis que le second trajet d'air d'entrée intérieure est fermé à un écoulement d'air, et dans laquelle, dans la seconde configuration, le second trajet d'air d'entrée intérieure est ouvert tandis que le premier trajet d'air d'entrée intérieure est fermé à un écoulement d'air ;
un premier dispositif de filtre (130) ;
un second dispositif de filtre (140), dans laquelle le premier dispositif de filtre présente une efficacité de filtration plus élevée que le second dispositif de filtre, dans laquelle de l'air intérieur s'écoulant à travers le premier trajet d'air d'entrée intérieure est dirigé à travers le premier dispositif de filtre et de l'air intérieur s'écoulant à travers le second trajet d'air d'entrée intérieure est dirigé à travers le second dispositif de filtre ;
un dispositif de commande (122) destiné à commander l'agencement de registre intérieur ; dans laquelle :
i) le dispositif de commande est configuré pour communiquer avec un système de gestion de bâtiment (150) ou une application pour téléphone intelligent et le dispositif de commande commande l'agencement de registre d'air intérieur en réponse à des instructions reçues à partir du système de gestion de bâtiment ou de l'application pour téléphone intelligent ; et/ou
ii) l'unité de filtration d'air comprend en outre un capteur de qualité d'air intérieur (121) destiné à obtenir une mesure relative à une qualité d'air intérieur à l'intérieur de l'environnement intérieur, dans laquelle le dispositif de commande commande l'agencement de registre d'air intérieur en réponse à la mesure de sorte que, lorsque la mesure indique que la qualité d'air intérieur est inférieure à un niveau prédéterminé, le dispositif de commande est configuré pour mettre l'agencement de registre intérieur dans la première configuration, et lorsque la qualité d'air intérieur est supérieure au niveau prédéterminé, le dispositif de commande met l'agencement de registre intérieur dans la seconde configuration.

2. Unité de filtration d'air (100, 200, 300) selon la revendication 1, comprenant un agencement de diffuseur d'entrée (114) et/ou un agencement de grille d'entrée (115), chacun disposé en amont du premier trajet d'air d'entrée intérieure (111) et du second trajet d'air d'entrée intérieure (112).

3. Unité de filtration d'air (100, 200, 300) selon la revendication 1 ou 2, dans laquelle le boîtier (110) comprend un agencement de registre extérieur comprenant un ou plusieurs éléments de registre extérieur pouvant être commandés entre au moins une configuration ouverte et une configuration fermée.

4. Unité de filtration d'air (100, 200, 300) selon une quelconque revendication précédente, dans laquelle le premier dispositif de filtre (130) comprend un filtre d'air à particules capable d'éliminer des allergènes et polluants submicroniques en suspension dans l'air, tels que poussière, pollen, moisissures, bactéries et virus, ou un filtre adsorbant.

5. Unité de filtration d'air (200, 300) selon une quelconque revendication précédente, comprenant un ventilateur principal configuré pour pousser un écoulement d'air à travers le boîtier (110).

6. Unité de filtration d'air (100, 200, 300) selon une quelconque revendication précédente, comprenant un ventilateur auxiliaire (260, 360) configuré pour pousser un écoulement d'air à travers le premier dispositif de filtre (130) et/ou le second dispositif de filtre (140), dans laquelle le dispositif de commande commande le fonctionnement du ventilateur en réponse à la configuration de l'agencement de registre intérieur (120) et/ou à la mesure relative à la qualité d'air intérieur.

7. Unité de filtration d'air (100, 200, 300) selon une quelconque revendication précédente, dans laquelle le dispositif de commande (122) est configuré pour recevoir des instructions destinées à modifier la configuration de l'agencement de registre extérieur à partir du système de gestion de bâtiment (150) ou de l'application pour téléphone intelligent.

8. Système de circulation d'air (20) comprenant l'unité de filtration d'air (100, 200, 300) selon l'une quelconque des revendications 1 à 4 et 6.

9. Bâtiment comprenant :
le système de circulation d'air (20) selon la revendication 8, et
un système de gestion de bâtiment (150) configuré pour communiquer avec le dispositif de commande (122) de sorte que le dispositif de commande commande l'agencement de registre d'air intérieur (120) en réponse à des instructions reçues à partir du système de gestion de bâtiment.

10. Procédé de filtration d'air d'un environnement intérieur à l'aide de l'unité de filtration d'air (100, 200, 300) selon l'une quelconque des revendications 1 à 7, le procédé comprenant :
la direction d'air intérieur à travers le premier dispositif de filtre (130) et/ou le second dispositif de filtre (140) en commandant la configuration de l'agencement de registre intérieur (120) ;
la direction d'air extérieur dans un trajet d'écoulement d'air filtré à évacuer dans l'environnement intérieur ; et
l'évacuation d'air filtré dans l'environnement intérieur,
dans lequel la configuration de l'agencement de registre intérieur est commandée par le dispositif de commande en réponse à :
i) une mesure relative à la qualité d'air intérieur obtenue à partir du capteur de qualité d'air intérieur, de sorte que, lorsque la mesure indique que la qualité d'air intérieur est inférieure à un niveau prédéterminé, l'agencement de registre intérieur est mis dans la première configuration, et lorsque la qualité d'air intérieur est supérieure au niveau prédéterminé, l'agencement de registre intérieur est mis dans la seconde configuration. ; et/ou
ii) des instructions, reçues par l'intermédiaire du dispositif de commande, destinées à commander la configuration de l'agencement de registre intérieur (120) à partir d'un système de gestion de bâtiment (150) ou d'une application pour téléphone intelligent.

11. Procédé de filtration d'air d'un environnement intérieur selon la revendication 10, dans lequel l'unité de filtration d'air (100, 200, 300) comprend en outre un ventilateur auxiliaire (260, 360) configuré pour pousser un écoulement d'air à travers le premier dispositif de filtre (130) et/ou le second dispositif de filtre (140), le procédé comprenant,
la modification du fonctionnement du ventilateur auxiliaire en réponse à la configuration de l'agencement de registre intérieur (120) et/ou à la mesure relative à la qualité **d'air** intérieur.
